# EUROPÄISCHE PATENTANMELDUNG

(11) **EP 1 380 908 A2**
(43) Veröffentlichungstag der Anmeldung: **14.01.2004**
(21) Anmeldenummer: 03014327.5
(22) Anmeldetag: 25.06.2003
(51) Int. Cl.: G05B 19/042

(54) **System zur automatischen Konfiguration von Steuerungssoftware**

(30) Priorität: 08.07.2002 DE 10230719
(71) Anmelder: SIEMENS AKTIENGESELLSCHAFT, 80333 München (DE)
(72) Erfinder: Hofmann, Werner, 91220 Schaittach (DE); Meyer, Wolfgang, 91088 Bubenreuth (DE)

(57) **Zusammenfassung**

Die Erfindung betrifft ein System (1) sowie ein Verfahren zur automatischen Konfiguration von Steuerungssoftware (2) für Produktions- und Fertigungsmaschinen (15). Die für die spezifische Ausprägung (3) der Maschine benötigte Software (2) wird hierbei mittels eines Engineering-Systems (9) aus vorgegebenen Softwaremodulen bzw. Komponenten (2_{1..n}) automatisch erstellt. Die Konfiguration ist hierbei durch einen bei der Bestellung der Maschine über ein ERP-System (4, 6) an das Engineering-System (9) übertragenen Schlüssel (5) genau spezifiziert. Die Kommunikation sowie der Abgleich von Datenformaten zwischen Engineering- und ERP-System erfolgt über ein Intranet oder Internet (14) oder eine andere technische Datenverbindung (11) und über eine Integrationsplattform (7), die die Funktionen der beteiligten Applikationen aufeinander abbildet.

## Beschreibung

Die Erfindung betrifft ein System sowie ein Verfahren zur automatischen Konfiguration von Steuerungssoftware für Produktions- und/oder Fertigungsmaschinen.

Die heutzutage in der Fertigung bzw. Produktion verwendeten Maschinen benötigen in Abhängigkeit von den von ihnen auszuführenden Aufgaben unterschiedliche Software für die Steuerung. Die Software wird je nach Maschinentyp und Funktion der Maschine speziell für den entsprechenden Typ konfiguriert und auf die Maschine geladen. Eine derartige maschinen- bzw. kundenspezifische Konfiguration der benötigten Software ist relativ aufwendig. Bei einer in Zukunft mit hoher Wahrscheinlichkeit erfolgenden weiteren Diversifizierung der Produktions- bzw. Fertigungsmaschinen, gemäß den von ihnen auszuführenden Aufgaben, wird auch immer spezifischere Steuerungssoftware benötigt und der Aufwand für die Konfiguration der jeweiligen Software steigt entsprechend. Steuerungssoftware für Produktions- und Fertigungsmaschinen wird heutzutage manuell mit Hilfe von Programmierumgebungen über Engineering-Systeme konfiguriert.

Der vorliegenden Erfindung liegt dementsprechend die Aufgabe zugrunde, ein System sowie ein Verfahren anzugeben, mit dessen Hilfe eine automatische Erstellung von spezifischer Software für Produktions- und Fertigungsmaschinen ermöglicht wird.

Diese Aufgabe wird durch ein System zur automatischen Konfiguration von Software für die Steuerung von Produktions- und/oder Fertigungsmaschinen gelöst, wobei die Software speziell für die jeweilige spezifische Ausprägung der Maschine ausgebildet ist und das System Mittel zur Klassierung der spezifischen Ausprägung der Maschine anhand eines Schlüssels, weitere Mittel zum Erstellen mindestens einer Liste mit Anweisungen von abzuarbeitenden Schritten bei der Konfiguration der speziellen Software, eine Vorrichtung zur Umwandlung der die Softwarekonfiguration beschreibenden Anweisungen in Konfigurationsdaten, einen Speicher zur Speicherung des Konfigurationswissens und eine weitere Vorrichtung zur Konfiguration der Software auf Basis der Anweisungen in den Konfigurationsdaten und des Konfigurationswissens aufweist.

Der Erfindung liegt die Erkenntnis zugrunde, dass bei einer zu erwartenden zunehmenden Diversifizierung der Maschinen, die für Produktions- bzw. Fertigungszwecke eingesetzt werden, in Zukunft auch der Aufwand für die Erstellung bzw. Konfiguration der Steuerungssoftware steigt, welche für diese Maschinen benötigt wird. Bei der Erstellung derartiger Software mittels Engineering-Systeme können Bedien- oder Programmierfehler auftreten, und der Konfigurationsprozess ist arbeits- und zeitaufwendig. Um in Zukunft eine verbesserte Erstellung dieser maschinenspezifischen Software zu realisieren, soll die Software automatisch konfiguriert bzw. generiert werden. Hierbei wird die Maschine anhand eines Daten-Schlüssels, der beispielsweise bei der Bestellung in Form einer Bestellnummer angegeben werden kann, klassiert bzw. typisiert, d.h. es wird vom System herausgesucht, welche der möglichen Softwarekonfigurationen für diesen Maschinentyp benötigt werden. Die entsprechende Software wird dann mit Hilfe von automatisch generierten Anweisungen aus vorgefertigten Komponenten bzw. Modulen auf der Basis von vorhandenem Konfigurationswissen automatisch konfiguriert. Bei dieser Vorgehensweise muss die endgültige Software nicht von einem Programmierer erstellt werden, sondern ein Engineering-System, welches auf die verschiedenen Softwarekomponenten Zugriff hat, kann diese automatisch zu einer Steuerungssoftware zusammenfügen. Eine derartige automatische Konfiguration erfolgt sowohl schneller als auch fehlerfrei.

Eine weitere vorteilhafte Ausbildung der Erfindung ist dadurch gekennzeichnet, dass die Mittel zur Klassierung der spezifischen Ausprägung der Maschine und dass die Mittel zum erstellen mindesten einer Liste mit Anweisungen von abzuarbeitenden Schritten als Software für die betriebswirtschaftliche Datenverarbeitung ausgebildet sind. Heutzutage wird in fast jedem Unternehmen eine derartige Software zur Verwaltung der Ressourcen verwendet. In der Regel handelt es sich hierbei um sogenannte ERP-Systeme (**E**nterprise **R**ecourse **P**lanning); es können aber auch sogenannte PDM-Systeme (**P**roduct **D**ata **M**anagement) oder im einfachsten Fall Office Programme wie Excel und Access verwendet werden. Über diese Systeme gehen beispielsweise Bestellungen ein, und es werden unternehmensinterne Ressourcen verwaltet, insbesondere werden Produktionsaufträge generiert. Die Verwendung eines ERP-Systems im Rahmen des erfindungsgemäßen Systems zur automatischen Erstellung von Steuerungssoftware für Produktionsmaschinen ist vorteilhaft, da über das ERP-System ohnehin die Bestellung der entsprechenden Maschine durch den Kunden erfolgt bzw. dort verwaltet wird. Innerhalb des ERP-Systems ist somit schon eine Bestellnummer vorhanden, welche vom erfindungsgemäßen System als Schlüssel für die Typisierung der gewünschten Maschine genutzt wird. Die entsprechende Bestellnummer ist zur Spezifizierung der Maschine ausreichend. Vom ERP-System kann dann automatisch an das jeweilige Engineering-System, welches die Steuerungssoftware konfigurieren soll, ein Auftrag erteilt werden, so dass die Konfiguration der Software gestartet wird. Gleichzeitig wird der gesamte Vorgang auf vorteilhafte Weise durch das ERP-System verwaltet.

Eine weitere vorteilhafte Ausbildung der Erfindung ist dadurch gekennzeichnet, dass die Vorrichtung zur Konfiguration der Software als Engineering-System ausgebildet ist. Derzeit wird maschinenspezifische Software ohnehin mit Hilfe von Engineering-Systemen, jedoch durch Programmierer mit Hilfe einer Programmieroberfläche erstellt. Der Einsatz der bereits vorhandenen Engineering-Systeme im erfindungsgemäßen System erübrigt somit einen Austausch der für die Konfiguration benötigten Einheiten, was aus Kostenaspekten vorteilhaft ist. Mit Hilfe des Engineering-Systems können die einzelnen Softwarekomponenten bzw. Module den beschreibenden Anweisungen folgend konfiguriert und die Software erstellt werden. In der erfindungsgemäßen Ausprägung erfolgt diese Abarbeitungen der Anweisungen automatisch, da die benötigten Komponenten mit Hilfe des Schlüssels bzw. der Bestellnummer ausreichend charakterisiert sind und über das Engineering-System automatisch zusammengefügt werden können.

Eine weitere vorteilhafte Ausbildung der Erfindung ist dadurch gekennzeichnet, dass die Vorrichtung zur Umwandlung der die Softwarekonfiguration beschreibenden Anweisungen in Konfigurationsdaten weitere Mittel zum Anpassen des Datenformats zwischen den Mitteln zum Erstellen mindestens einer Liste mit Anweisungen, der Vorrichtung zur Konfiguration der Software und dem Speicher zur Speicherung des Konfigurationswissens aufweist. Das ERP-System und das Engineering-System benötigen Daten in unterschiedlichen Datenformaten. Die Umwandlung der Anhand von Bestellnummern erstellten Listen mit abzuarbeitenden Schritten in die Konfigurationsdaten, die vom Engineering-System als Batch-Anweisungen verstanden und abgearbeitet werden, wird durch diese erfindungsgemäße Vorrichtung sichergestellt. Aus diesem Grund wird von der Vorrichtung für die Datenübertragung eine Anpassung an das Format der Daten bzw. die Informationsstruktur der jeweiligen Einheiten durchgeführt. Die Vorrichtung zur Datenübertragung fungiert somit als eine Art Übersetzer zwischen den beteiligten Einheiten innerhalb des erfindungsgemäßen Systems. Ein reibungsloser Datenaustausch und eine Kommunikation zwischen den Einheiten ist dadurch gewährleistet.

Eine weitere vorteilhafte Ausbildung der Erfindung ist dadurch gekennzeichnet, dass die Vorrichtung zur Umwandlung der die Softwarekonfiguration beschreibenden Anweisungen zum Hinzufügen des Konfigurationswissens aus dem Speicher bei der Umwandlung der Anweisungen in die Konfigurationsdaten vorgesehen ist. Hierdurch wird sichergestellt, dass die einzelnen Schritte der Anweisungen richtig interpretiert und in zusammenzufügende Softwarekomponenten bzw. -module eingeteilt werden, die dann in definierter Weise vom Engineering-System zusammengesetzt werden.

Eine weitere vorteilhafte Ausbildung der Erfindung ist dadurch gekennzeichnet, dass zur Kommunikation zwischen den beteiligten Mitteln und den Vorrichtungen Datenübertragungsmittel vorgesehen sind und dass mindestens eines der Datenübertragungsmittel als Intranet und/oder Internet ausgebildet ist. Sind die beteiligten Einheiten des Systems nicht an einem Standort zusammengefasst oder generell dezentral verwaltet, so ist die Abwicklung der entsprechenden Datenübertragungen über das Datennetz trotzdem möglich. Eine derartige Ausgestaltung der Erfindung ist vor allem von Vorteil, wenn das ERP-System in der Unternehmenszentrale betrieben wird, eine Erstellung und Konfiguration spezieller maschinentypischer Software jedoch an anderen Standorten erfolgt. Durch die Nutzung des Intra- bzw. Internets erübrigt sich ein spezielles Versenden von benötigten Daten durch beteiligte Personen.

Eine weitere vorteilhafte Ausbildung der Erfindung ist dadurch gekennzeichnet, dass das System zur Bereitstellung der konfigurierten Software in Form eines Computerprogrammprodukts für die Produktions- und/oder Fertigungsmaschinen vorgesehen ist. Die erstellte und speziell für einen Maschinentyp konfigurierte Software kann durch diese vorteilhafte Ausbildung der Erfindung auf einem Datenträger, beispielsweise einer Diskette oder auch einer CD, gespeichert werden und dann entweder der Maschine mit Lieferung beigefügt werden oder bei Installation, d.h. Aufstellen der Maschine durch einen Fachmann vor Ort, vom Fachmann auf der Maschine installiert werden. Auf diese Weise kann dem Kunden eine Hardwarekopie der von ihm georderten Software zur entsprechenden Maschine mitgegeben werden. Unter Umständen kann die Software beim Kunden, falls sie auf der Maschine beschädigt wurde, vom Datenträger wieder auf die Maschine geladen werden.

Eine weitere vorteilhafte Ausbildung der Erfindung ist dadurch gekennzeichnet, dass das System zur Übertragung der konfigurierten Software über das Intranet und/oder Internet auf die Produktions- und/oder Fertigungsmaschine vorgesehen ist. Bei dieser Ausbildung erübrigt sich das Herstellen einer Hardwarekopie, da die fertiggestellte Software direkt auf eine Maschine übertragen werden und vor Ort beim Kunden installiert werden kann. Dies ist vor allem vorteilhaft, wenn beispielsweise ein Software-Update erstellt und vom Hersteller direkt an den Kunden geliefert wird. Ein zeitaufwendiges Versenden über den Postweg erübrigt sich in diesem Fall. Die Software steht direkt nach Fertigstellung durch den Hersteller für den Kunden auch zur Verfügung.

Im Folgenden wird die Erfindung anhand der in den Figuren dargestellten Ausführungsbeispiele näher beschrieben und erläutert. Es zeigen:
- FIG 1: eine schematische Darstellung eines Systems zur auto- matischen Konfiguration von Steuerungssoftware für Produktionsmaschinen.
- FIG 2: eine schematische Darstellung einer Datenübertragung im System über ein Intra- bzw. Internet.

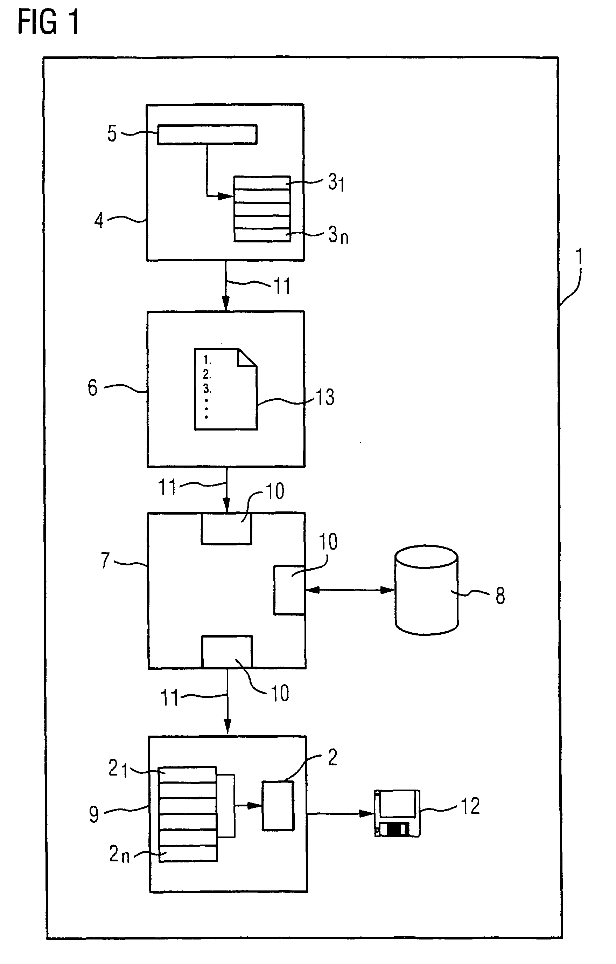

FIG 1 zeigt eine schematische Darstellung eines Ausführungsbeispiels des Systems 1 zur automatischen Konfiguration von Steuerungssoftware 2 für Produktions- und/oder Fertigungsmaschinen 15. Hierbei wird die Steuerungssoftware 2 an die jeweilige spezifische Ausprägung 3 der Maschine angepasst. Die spezifische Ausprägung 3 der Maschine ist durch einen Schlüssel 5 gekennzeichnet, der bei der Bestellung der Maschine übermittelt wird. Von den Mitteln 4 zur Klassierung wird der Schlüssel 5 gelesen und interpretiert und zur Typisierung der Ausprägung 3 der Maschine genutzt. Ein spezifischer Maschinentyp 3_{1..n} wird auf diese Weise ermittelt. In Abhängigkeit vom jeweiligen Maschinentyp 3_{1..n} wird vom System 1 durch die Mittel 6 zum erstellen einer Liste 13 eine Arbeitsliste erstellt, die Anweisungen enthält, wie das jeweilige Produkt zu fertigen ist. Bei der Konfiguration der Software 2 für die Maschine werden diese Arbeitslisten in Anweisungen für die Konfiguration umgewandelt. Hierbei werden die einzelnen Schritte der Arbeitslisten als "Montageschritte" für die Softwaremodule in der Automatisierung interpretiert und vom System 1 in Konfigurationsanweisungen für ein Engineering-System 9 umgesetzt. Das dafür benötigte Konfigurationswissen ist in einer Datenbank auf einem Speicher 8 hinterlegt. Aus den jeweiligen Komponenten bzw. Modulen 2_{1..n} wird die maschinenspezifische Software 2 zusammengestellt, und schließlich auf einem Datenträger 12 hinterlegt. Die Datenübertragung zwischen den beteiligten Einheiten im System 1 erfolgt über Datenübertragungsmittel 11. Die Vorrichtung 7 zur Umwandlung der die Softwarekonfiguration beschreibenden Anweisungen aus der Liste 13 hat Adapter 10, die eine Anpassung an das Format der Daten bzw. die Informationsstruktur der jeweiligen Einheiten im System 1 durchführen.

Die Besonderheit des in FIG 1 dargestellten Systems 1 besteht im Wesentlichen darin, dass maschinenspezifische Software 2 in Abhängigkeit von einem Maschinentyp 3_{1..n} automatisch mit Hilfe eines Engineering-Systems 9 konfiguriert werden kann. Wenn eine Bestellung einer Maschine im ERP-System 4, 6 ankommt, wird der Prozess der Softwarekonfiguration automatisch angestoßen und die maschinenspezifische Software 2 wird vom Engineering-System 9 konfiguriert. Die Weiterleitung der Daten und die Umwandlung der ERP- Arbeitsanweisungen in Anweisungen für die Softwarekonfiguration wird hierbei von der Integrationsplattform 7 übernommen. Die Integrationsplattform 7 übersetzt die Datenformate mithilfe der Adapter 10 und fügt den Arbeitsschritten Konfigurationswissen aus der Datenbank 8 hinzu. Vorteilhaft ist hierbei vor allem, dass das Programmieren der maschinenspezifischen Software 2 entfällt, da sie automatisch hergestellt werden kann. Die Herstellung der Software 2 erfolgt auf diese Weise schneller und sicherer.

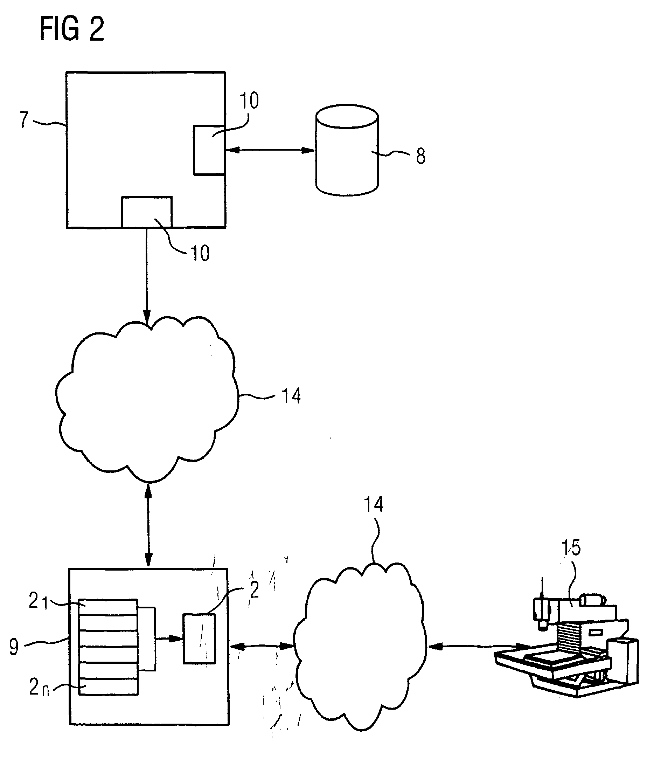

FIG 2 zeigt eine schematische Darstellung eines Ausführungsbeispiels des Systems 1 bei dem die Datenübertragung im System 1 über ein Intra- bzw. Internet 14 erfolgt. Beispielhaft ist hier die Übertragung zwischen Integrationsplattform 7 und Engineering-System 9 dargestellt. Außerdem wird in der beispielhaften Ausführung die vom Engineering-System 9 erstellte Software 2 über ein Intra- bzw. Internet 14 auf die zu steuernde Produktions- bzw. Fertigungsmaschine 15 übertragen.

Die Besonderheit des in FIG 2 dargestellten Ausführungsbeispiels des Systems 1 besteht im Wesentlichen darin, dass für die Datenübertragung zischen den beteiligten Mitteln und Vorrichtungen im System 1 das ohnehin vorhandene Internet bzw. Intranet 14 mit der dazugehörigen Infrastruktur genutzt werden kann. Es entstehen für die Datenübertragung keine zusätzlichen Kosten, was einen wirtschaftlichen Vorteil darstellt. Außerdem ermöglicht diese Art der Kommunikation innerhalb des vorgeschlagenen Systems 1 eine Dezentralisierung der ERP-Systeme 4, 6, der Integrationsplattform 7 und des Engineering-Systems 9, was eine Standort-, Länder- oder Kontinentübergreifende Herstellung der Software 2 ermöglicht. Vorteilhaft ist auch das direkte Versenden der erstellten Software 2 über das Internet bzw. Intranet 14 auf die Produktions- bzw. Fertigungsmaschine 15. Auf diese Weise kann die erstellte Software, aber auch Updates von Software, die vom Hersteller maschinenspezifisch konfiguriert werden, zügig und standortunabhängig auf die Maschine geladen und installiert werden. Eine derartige Abwicklung des Installationsprozesses birgt wirtschaftliche Vorteile für den Hersteller, da Produktions- und Versandkosten wegfallen und für den Maschinenbesitzer, da die Maschine schneller eingesetzt werden kann.

Zusammenfassend betrifft die Erfindung ein System 1 sowie ein Verfahren zur automatischen Konfiguration von Steuerungssoftware 2 für Produktions- und Fertigungsmaschinen 15. Die für die spezifische Ausprägung 3 der Maschine benötigte Software 2 wird hierbei mittels eines Engineering-Systems 9 aus vorgegebenen Softwaremodulen bzw. Komponenten 2_{1..n} automatisch erstellt. Die Konfiguration ist hierbei durch einen bei der Bestellung der Maschine über ein ERP-System 4, 6 an das Engineering-System 9 übertragenen Schlüssel 5 genau spezifiziert. Die Kommunikation sowie der Abgleich von Datenformaten zwischen Engineering- und ERP-System erfolgt über ein Intranet oder Internet 14 oder eine andere technische Datenverbindung 11 und über eine Integrationsplattform 7, die die Funktionen der beteiligten Applikationen aufeinander abbildet.

## Patentansprüche

1. System (1) zur automatischen Konfiguration von Software (2) für die Steuerung von Produktions- und/oder Fertigungsmaschinen (15), wobei die Software (2) speziell für die jeweilige spezifische Ausprägung (3) der Maschine ausgebildet ist, mit
• Mitteln (4) zur Klassierung der spezifischen Ausprägung (3) der Maschine anhand eines Schlüssels (5),
• weiteren Mitteln (6) zum Erstellen mindestens einer Liste (13) mit Anweisungen von abzuarbeitenden Schritten bei der Konfiguration der speziellen Software (2),
• einer Vorrichtung (7) zur Umwandlung der die Softwarekonfiguration beschreibenden Anweisungen in Konfigurationsdaten,
• einem Speicher (8) zur Speicherung des Konfigurationswissens und
• einer weiteren Vorrichtung (9) zur Konfiguration der Software (2) auf Basis der Anweisungen in den Konfigurationsdaten und des Konfigurationswissens.

2. System nach Anspruch 1,
**dadurch gekennzeichnet,**
**dass** die Mittel (4) zur Klassierung der spezifischen Ausprägung (3) der Maschine als Software für die betriebswirtschaftliche Datenverarbeitung ausgebildet sind.

3. System nach einem der Ansprüche 1 oder 2,
**dadurchgekennzeichnet,**
**dass** die Mittel (6) zum Erstellen mindestens einer Liste (13) mit Anweisungen von abzuarbeitenden Schritten als Software für die betriebswirtschaftliche Datenverarbeitung ausgebildet sind.

4. System nach einem der Ansprüche 1 bis 3,
**dadurch gekennzeichnet,**
**dass** die Vorrichtung (9) zur Konfiguration der Software (2) als Engineering-System ausgebildet ist.

5. System nach einem der Ansprüche 1 bis 4,
**dadurch gekennzeichnet,**
**dass** die Vorrichtung (7) zur Umwandlung der die Softwarekonfiguration beschreibenden Anweisungen in Konfigurationsdaten weitere Mittel (10) zum Anpassen des Datenformats zwischen den Mitteln (6) zum Erstellen mindestens einer Liste mit Anweisungen, der Vorrichtung (9) zur Konfiguration der Software (2) und dem Speicher (8) zur Speicherung des Konfigurationswissens aufweist.

6. System nach einem der Ansprüche 1 bis 5,
**dadurch gekennzeichnet,**
**dass** die Vorrichtung (7) zur Umwandlung der die Softwarekonfiguration beschreibenden Anweisungen zum Hinzufügen des Konfigurationswissens aus dem Speicher (8) bei der Umwandlung der Anweisungen in die Konfigurationsdaten vorgesehen ist.

7. System nach einem der Ansprüche 1 bis 6,
**dadurch gekennzeichnet,**
**dass** zur Kommunikation zwischen den beteiligten Mitteln (4, 6) und den Vorrichtungen (7, 9) Datenübertragungsmittel (11) vorgesehen sind.

8. System nach Anspruch 7,
**dadurchgekennzeichnet,**
**dass** mindestens eines der Datenübertragungsmittel (11) als Intranet und/oder Internet (14) ausgebildet ist.

9. System nach einem der Ansprüche 1 bis 8,
**dadurch gekennzeichnet,**
**dass** das System (1) zur Bereitstellung der konfigurierten Software (2) in Form eines Computerprogrammprodukts (12) für die Produktions- und/oder Fertigungsmaschinen (15) vorgesehen ist.

10. System nach einem der Ansprüche 1 bis 9,
**dadurch gekennzeichnet,**
**dass** das System (1) zur Übertragung der konfigurierten Software (2) über das Intranet und/oder Internet (14) auf die Produktions- und/oder Fertigungsmaschinen (15) vorgesehen ist.

11. Verfahren zur automatischen Konfiguration von Software (2) für die Steuerung von Produktions- und/oder Fertigungsmaschinen (15),
• wobei die Software (2) speziell für die jeweilige spezifische Ausprägung (3) der Maschine konfiguriert wird,
• die spezifische Ausprägung (3) der Maschine anhand eines Schlüssels (5) klassiert wird,
• mindestens eine Liste (13) mit Anweisungen von abzuarbeitenden Schritten bei der Konfiguration der speziellen Software (2) erstellt wird,
• die Softwarekonfiguration beschreibende Anweisungen in Konfigurationsdaten umgewandelt werden,
• das Konfigurationswissen in einem Speicher (8) gespeichert wird und
• die Software (2) auf Basis der Anweisungen in den Konfigurationsdaten und des Konfigurationswissens konfiguriert wird.

12. Verfahren nach Anspruch 11,
**dadurch gekennzeichnet,**
**dass** die Klassierung der spezifischen Ausprägung (3) der Maschine durch eine Software für die betriebswirtschaftliche Datenverarbeitung erfolgt.

13. Verfahren nach einem der Ansprüche 11 oder 12,
**dadurch gekennzeichnet,**
**dass** das Erstellen mindestens einer Liste (13) mit Anweisungen von abzuarbeitenden Schritten durch eine Software für die betriebswirtschaftliche Datenverarbeitung erfolgt.

14. Verfahren nach einem der Ansprüche 11 bis 13,
**dadurch gekennzeichnet,**
**dass** die Konfiguration der Software (2) durch ein Engineering-System erfolgt.

15. Verfahren nach einem der Ansprüche 11 bis 14,
**dadurch gekennzeichnet,**
**dass** das Datenformat der Mittel (6) zum Erstellen mindestens einer Liste mit Anweisungen, der Vorrichtung (9) zur Konfiguration der Software (2) und des Speichers (8) zur Speicherung des Konfigurationswissens durch weitere Mittel (7) der Vorrichtung (7) zur Umwandlung der die Softwarekonfiguration beschreibenden Anweisungen in Konfigurationsdaten weitere Mittel (10) aneinander angepasst wird.

16. Verfahren nach einem der Ansprüche 11 bis 15,
**dadurch gekennzeichnet,**
**dass** das Konfigurationswissen bei der Umwandlung der Anweisungen in die Konfigurationsdaten aus dem Speicher (8) durch die Vorrichtung (7) zur Umwandlung der die Softwarekonfiguration beschreibenden Anweisungen hinzugefügt wird.

17. Verfahren nach einem der Ansprüche 11 bis 16,
**dadurch gekennzeichnet,**
**dass** die Kommunikation zwischen den beteiligten Mitteln (4, 6) und den Vorrichtungen (7, 9) über Datenübertragungsmittel (11) erfolgt.

18. Verfahren nach Anspruch 17,
**dadurch gekennzeichnet,**
**dass** die Datenübertragung zwischen mindesten zwei der beteiligten Mittel (4, 6) und Vorrichtungen (7, 9) über Intranet und/oder Internet (14) erfolgt.

19. Verfahren nach einem der Ansprüche 11 bis 18,
**dadurch gekennzeichnet,**
**dass** die vom System (1) konfigurierte Software (2) in Form eines Computerprogrammprodukts (12) für die Produktions- und/oder Fertigungsmaschinen (15) bereitgestellt wird.

20. Verfahren nach einem der Ansprüche 11 bis 19, **dadurch gekennzeichnet,**
**dass** die vom System (1) konfigurierte Software (2) über das Intranet und/oder Internet (14) auf die Produktions- und/oder Fertigungsmaschinen (15) übertragen wird.

21. Produktions- und/oder Fertigungsmaschine (15) die zur Verwendung von mittels eines Systems (1) und eines Verfahrens nach den Ansprüchen 1 bis 20 erstellten Software (2) vorgesehen ist.

22. Computerprogrammprodukt (12) zur Steuerung einer Produktions- und/oder Fertigungsmaschine (15) hergestellt mittels eines Systems (1) und eines Verfahrens nach einem der Ansprüche 1 bis 20.
